Europäisches Patentamt

European Patent Office

Office européen des brevets

(11) Publication number: **0 329 376**
**A2**

(12) **EUROPEAN PATENT APPLICATION**

(21) Application number: **89301375.5**

(22) Date of filing: **14.02.89**

(51) Int. Cl.4: **C08J 7/04 , C08J 5/18 ,
C09K 3/16**

(30) Priority: **15.02.88 GB 8803453**

(43) Date of publication of application:
**23.08.89 Bulletin 89/34**

(84) Designated Contracting States:
**AT BE CH DE ES FR GB GR IT LI NL SE**

(71) Applicant: **COURTAULDS FILMS &
PACKAGING (HOLDINGS) LTD.
Bath Road
Bridgwater Somerset TA6 4PA(GB)**

(72) Inventor: **Kendall, Kenneth Douglas
St Clair Main Road
Middlezoy Bridgwater Somerset(GB)**

(74) Representative: **Claisse, John Anthony, Dr.
Courtaulds Films & Packaging (Holdings) Ltd
Bath Road
Bridgwater Somerset TA6 4PA(GB)**

(54) **Polymeric films.**

(57) This invention concerns polymeric films having slip and anti-static properties. This is achieved by the polyolefin films having on at least one surface a coating of a composition including a silicone slip agent having a viscosity of 10,000 to 600,000 centistokes at 25°C in combination with an anti-static agent including an ethanolammonium cation. The slip agent is preferably polydimethylsiloxane, and the ethanolammonium cation is preferably present in the form of ah ethanolammonium alkyl sulfate.

EP 0 329 376 A2

## POLYMERIC FILMS

This invention concerns polymeric films having slip and anti-static properties.

It is known to impart slip to polymeric films, for example polypropylene films, by the inclusion of silicone within the films. In general, only low levels of silicone content can be used since high levels tend to affect adversely the optics and sealability of the films.

It is also known to impart anti-static properties to polymeric films, for example polypropylene films, by the inclusion of one of a large variety of salts having surface active properties.

The requirements for slip and anti-static properties are mutually exclusive. Thus silicone slip agents tend to repel water, whereas anti-static agents tend to disperse water over the surface of a film. The result is that combining slip and anti-static agents tends in particular to reduce significantly if not destroy the properties of the agents concerned, especially the anti-static effect.

According to the present invention there is provided a polyolefin film having on at least one surface a coating of a composition comprising a silicone slip agent having a viscosity of 10,000 to 600,000 centistokes at 25°C in combination with an anti-static agent including an ethanolammonium cation.

Films of the present invention have shown unexpectedly good anti-static effect combined with good slip, in particular coated polypropylene films, especially when compared with films having coatings of compositions of other anti-static agents in combination with particular slip agents. This can provide improved machine performance when films of the present invention are used with horizontal or vertical form-fill-seal machines, and in particular when films of the invention are used on very high speed cigarette carton overwrap machines. In addition to these advantageous properties, the use of a coating enables clear polyolefin films to be produced which have reduced haze compared with films containing a silicone slip agent within the bulk of the film. Since diffusion of materials from within the bulk of the film is not required to achieve these effects, they are available immediately without relying on diffusion from within the bulk of the film to its surface. The result is a generally more stable slip which does not tend constantly to increase as a result of diffusion of the slip agent to the film surface. Furthermore, there can be the cost advantage of being able to use less of an additive in the form of a coating than is required to achieve a comparable level of effect by including the additive within the film.

The silicone slip agent should have a viscosity of 10,000 to 600,000 centistokes (cs) at 25°C, preferably 30,000 to 100,000 cs at 25°C. The preferred silicones for the purpose are polydimethylsiloxanes of the required viscosity.

The anti-static agent should include an ethanolammonium cation. Although a particularly good combination of slip and anti-static properties has been achieved with compounds containing the mono-ethanolammonium cation admixed with a silicone, compounds containing the di- or tri-ethanolammonium cation an also be used. The anion is preferably an alkylsulfate ion, more particularly those in which the alkyl moiety contains from 12 to 18 carbon atoms, and advantageously from 12 to 14 carbon atoms. The especially preferred anion is the lauryl sulfate ion.

The preferred anti-static agent for use in compositions of the present invention is mono-ethanolamine lauryl sulfate.

The weight ratio of slip agent to anti-static agent is preferably from 1:3 to 1:5.

The amount of composition applied to the film is preferably such that the silicone on the finished film is present in an amount of from 1 to 4 mg per square metre of film surface to which it is applied.

Coated films of the present invention are preferably coated oriented films, in particular coated, oriented polypropylene films. Coating can be effected in known manner, but it is preferred when producing coated oriented films to apply the coating to the film and thereafter to effect at least a final orientation step. Thus biaxially oriented films are preferably coated between stretching in the machine and transverse directions.

Coating can be effected in known manner, but it is preferred to use the compositions of the invention in the form of an aqueous emulsion of the silicone slip agent having the anti-static agent dissolved therein. The emulsions preferably contain from 1.0 to 3.0 weight percent of the silicone slip agent, the amount of anti-static agent being selected accordingly, in particular to provide the preferred weight ratio in the final coating on the film of from 1:3 to 1:5 of slip agent to anti-static agent.

Films of the present invention can, if desired, be subjected to further treatment steps known in the art, for example they can be corona discharge or flame treated to improve printability, such treatment steps being used on the uncoated surface of the film prior to the film being wound, for example to improve the printability of the film.

Although in general only one side of the film will be coated with composition containing the slip agent and the anti-static agent containing ethanolammonium cations, the composition will usually be transferred from the coated surface to the uncoated surface when the film is wound up. Coating of both sides of the film is therefore generally unnecessary to achieve slip and anti-static properties on both sides of the film.

The films of the present invention can be clear, for example clear polypropylene films, and such films can have good anti-static and slip properties combined with low haze. The present invention also provides voided polyolefin films, for example voided polypropylene films having at least one non-voided outer layer with a coating of a silicone slip agent having the specified viscosity in combination with an anti-static agent including a mono-, di- or tri-ethanolammonium cation. Voiding can be achieved by known methods, for example using organic or inorganic particulate materials.

Coated films of the present invention can also include at least one heat sealable layer, for example a layer of a random polymer containing units derived from two or more of ethylene, propylene or but-1-ene.

The following Example is given by way of illustration only:-

## EXAMPLE

A three layer polymeric web was produced by coextruding a propylene homopolymer core with two outer layers each of a copolymer of propylene with 4 weight percent of units derived from ethylene. The resulting web was stretched in the direction of extrusion (i.e. the machine direction) by 4.5:1 using heated rollers.

Thereafter, the web was coated with one of a variety of compositions consisting of an anti-static agent in distilled water, with and without an emulsion of polydimethylsiloxane. The polydimethylsiloxane had a viscosity of 100,000 cs at 25° C. Coating was effected so that on subsequent stretching of the film by 10:1 in the transverse direction the amount of anti-static agent present on the biaxially stretched film was from 8 to 10 mg/square metre, this being achieved by adjusting the water content of the applied composition.

The uncoated face of the film was then corona discharge treated to obtain a surface tension value of 42 dynes/cm, and the film was wound up.

The homopolymer core of the resultant film was 23 microns thick, each outer copolymer layer being 1 micron thick.

The slip properties of each of the films were measured at doff according to British Standard BS2782 part 8, method 824A, and the anti-static properties of each film were measured at 50 percent relative humidity using a Hewlett Packard 16008A Resisitivity Cell. These values were also measured for a sample of uncoated film subjected to otherwise identical treatment.

The results obtained are shown in the following Table, with the exception of the film-to-film slip values for films having a coating of anti-static agent without the polydimethylsiloxane, all of which being in the range 1.5 to 2.0, i.e. comparable to that of the uncoated control film which showed a film-to-film slip value of 1.5.

TABLE

| Anti-static Agent | Without Silicone | With Silicone (1.6 - 2.0 mg/m$^2$) | |
|---|---|---|---|
| | Surface Resistivity ohm sq$^{-1}$ | Surface Resistivity ohm sq$^{-1}$ | Film-to-film slip |
| mono-ethanolammonium lauryl sulfate | $1 \times 10^9$ | $4 \times 10^{10}$ | 5.4 |
| di-ethanolammonium lauryl sulfate | $9 \times 10^8$ | $3 \times 10^{10}$ | 5.25 |
| tri-ethanolammonium lauryl sulfate | $2 \times 10^9$ | $2 \times 10^{10}$ | 4.9 |
| sodium lauryl sulfate | $7 \times 10^{10}$ | $1 \times 10^{14}$ | 5.2 |
| N,N-di-methyl-N,N-dilauryl ammonium chloride | $8 \times 10^8$ | $1 \times 10^{14}$ | 3.3 |
| $C_{12}H_{23}-N^+(CH_3)_2CH_2CO_2^-$ | $5 \times 10^8$ | $1 \times 10^{14}$ | 4.1 |
| Uncoated control | $1 \times 10^{14*}$ | - | - |

*film-to-film slip value 1.5

The Table shows that the anti-static properties of films coated with compositions containing anti-static agents with ethanolammonium cations and the polydimethylsiloxane were not significantly adversely affected by the presence of the siloxane, as measured by the decrease in surface resisitivity of the film on having the coating applied, whereas the anti-static properties of films having coating compositions containing other anti-static agents were very significantly adversely affected. Furthermore, the film-to-film slip values for the films of the present invention were as good and possibly even better than those for similar films but with anti-static agents not including an ethanolammonium cation.

## Claims

1. A polyolefin film having on at least one surface a coating of a composition comprising a silicone slip agent having a viscosity of 10,000 to 600,000 centistokes at 25° C in combination with an anti-static agent including an ethanolammonium cation.

2. A film according to claim 1, wherein the silicone slip agent has a viscosity of from 30,000 to 100,000 centistokes at 25° C.

3. A film according to claim 1 or claim 2, wherein the silicone slip agent is polydimethylsiloxane.

4. A film according to any of the preceding claims, wherein the anti-static agent includes the mono-ethanolammonium cation.

5. A film according to any of the preceding claims, wherein the anti-static agent is an ethanolammonium alkyl sulfate.

6. A film according to claim 5, wherein the alkyl moiety of the alkyl sulfate contains from 12 to 18 carbon atoms.

7. A film according to claim 6, wherein the alkyl moiety contains from 12 to 14 carbon atoms.

8. A film according to claim 7, wherein the alkyl moiety is a lauryl group.

9. A film according to claim 5, wherein the anti-static agent is mono-ethanolamine lauryl sulfate.

10. A film according to any of the preceding claims, wherein the weight ratio of silicone slip agent to anti-static agent is from 1:3 to 1:5.

11. A film according to any of the preceding claims, wherein the silicone coating is present in an amount of from 1 to 4 mg, per square metre of film surface.

12. A film according to any of the preceding claims, wherein the coating composition is applied before a final orientation of the film.

13. A film according to any of the preceding claims, wherein the film is clear or has a voided core.

14. A film according to any of the preceding claims, wherein the face of the film not having the coating thereon is flame or corona discharge treated.

15. A film according to any of the preceding films, wherein the polyolefin is polypropylene.